# EUROPÄISCHE PATENTSCHRIFT

(11) **EP 0 725 000 B1**
(45) Veröffentlichungstag und Bekanntmachung des Hinweises auf die Patenterteilung: **04.08.1999**
(21) Anmeldenummer: 96100818.2
(22) Anmeldetag: 20.01.1996
(51) Int. Cl.: B62D 1/19

(54) **Lenkspindel für Lenkvorrichtungen bei Kraftfahrzeugen**
Steering shaft for motor vehicle steering system
Arbre de direction pour système de direction de véhicules à moteur

(30) Priorität: 01.02.1995 DE 19503124
(43) Veröffentlichungstag der Anmeldung: 07.08.1996
(73) Patentinhaber: ETABLISSEMENT SUPERVIS, FL-9490 Vaduz (LI)
(72) Erfinder: Näff, Dominik, Fl-9495 Triessen (LI); Breuss, Hubert, A-6800 Gisingen (AT)
(74) Vertreter: Hefel, Herbert, Dipl.-Ing.

(56) Entgegenhaltungen:
- GB-A- 1 156 423
- US-A- 3 487 710

## Beschreibung

Die Erfindung bezieht sich auf eine Lenkspindel für Lenkvorrichtungen bei Kraftfahrzeugen mit den Merkmalen des Oberbegriffes des Patentanspruches 1.

Lenkspindeln bei Lenkvorrichtungen für Kraftfahrzeuge sind oft zweiteilig. Dadurch soll gewährleistet werden, daß im Falle einer Frontalkollision die Lenkvorrichtung den Fahrer nicht gefährdet. Lenkspindeln sollen in der Herstellung billig sein, es sollen für ihre Herstellung möglichst einfache und preisgünstige Halbzeuge verwendet werden können, spanabhebende Bearbeitungen sollen möglichst vermieden werden, um die Herstellungskosten nicht in die Höhe zu treiben. Trotz ihres mindestens zweiteiligen Aufbaues dürfen sie in Drehrichtung der Spindel kein Spiel aufweisen, und darüberhinaus muß sich die Lenkspindel, wenn eine vorherbestimmbare Kraft in axialer Richtung infolge einer Kollison auf sie einwirkt, verkürzen, indem die Teile sich achsial gegeneinander verschieben.

Für Lenkspindeln für Lenkvorrichtungen bei Kraftfahrzeugen sind zwei verschiedene Bauarten bekannt geworden: Bei der einen Bauart wird im Kollisionsfall die Stoßenergie in Verformungsarbeit umgewandelt, bei der anderen bekannt gewordenen Bauart wird die Stoßenergie im Kollisionsfall in Reibungsarbeit und damit in Wärme umgesetzt (DE-AS 29 57 713; DE-AS 29 47 395; DE-AS 29 11 021; DE-AS 24 31 883; DE 16 30 376 B2; DE-OS 25 31 263; DE-OS 22 47 850; DE-OS 22 32 836; DE-OS 21 08 913; DE-OS 20 20 390; DE-PS 32 23 004; DD 141 115; GB 15 24 871).

In diesem Zusammenhang sind hier vor allem jene Lenkspindeln zu erwähnen, die der ersten Kategorie angehören und die aus der DE-OS 40 17 995, der GB-PS 11 56 423 und der US-PS 3 504 567 bekannt sind.

Die DE-OS 40 17 995 zeigt und beschreibt ein Lenksäulenrohr für ein Kraftfahrzeug, bei welchem im Falle eines Zusammenstoßes eine überlegene Energieabsorptionsleistung erhalten wird. Das Lenksäulenrohr weist Energieabsorber zwischen einem ersten Ende eines ersten Säulenrohrteiles und einem zweiten Ende eines zweiten Säulenrohrteiles auf. In jedem Energieabsorber ist an einem Teil des innenseitigen Stückes des Energieabsorbers ein Knickeinstellabschnitt so vorgesehen, daß erzu einem außenseitigen Stück des streifenförmigen Absorbers hin gewölbt ist. Wenn somit bei einem Zusammenstoß auf das erste oder das zweite Säulenrohrteil eine Stoßkraft aufgebracht wird, findet ein aufeinanderfolgendes Knicken der Energieabsorber statt, wodurch die absorbierte Energiemenge unter begrenzter Belastung und begrenzter Verlagerung maximiert wird. Die Energieabsorber sind streifenförmig und als getrennte Bauteile ausgebildet und mit den Lenksäulenrohren verschweißt. Eine dazu unmittelbar vergleichbare Konstruktion zeigt die US-PS 3 504 567, bei der die streifenförmigen Absorber in Nuten des einen Lenksäulenteiles liegen. Bei der vergleichbaren Konstruktion nach der GB-PS 11 56 423 sind ebenfalls streifenförmige Absorber vorgesehen, hier als Teil des einen Rohrstückes.

Diese streifenförmigen Energieabsorber werden im Falle einer Frontalkollision, bei der erhebliche Kräfte auftreten, allzu leicht verformt, so daß sie nur einen sehr geringen Teil der auftretenden Energie aufnehmen können.

Dieser Nachteil wurde offenbar bereits erkannt, und es wurde daher vorgeschlagen, Aufreißstreifen vorzusehen (GB-PS 22 47 652), die von einer Langlochreihe begrenzt sind. Abgesehen davon, daß im Kollisionsfall bei einer solchen Ausbildung der Begrenzung eines Aufreißstreifens keine kontinuierliche Energieabsorbung möglich ist, sondern nur eine sich stoßweise wiederholende, mußte bei praktischen Versuchen vor allem festgestellt werden, daß in den wenigsten Fällen diese Aufreißlinien tatsächlich aufgerissen worden sind. Vielmehr verlaufen die Risse überraschenderweise schräg und völlig unkontrollierbar zur Längsachse des Rohres in das volle Material hinein. Eine Erklärung dafür dürfte offenbar in der Materialstruktur liegen. Die hier verwendeten metallischen Rohre besitzen eine kubischraumzentrierte Gitterstruktur, und die festgestellten Risse erstrecken sich entlang den Gleitlinien oder Gleitebenen dieser Gitterstruktur. Das dürfte auch der Grund dafür sein, daß vorbekannte Konstruktionen dieser Art bislang keinen Eingang in die Praxis gefunden haben, da die ihnen zugedachte Funktion nicht hinreichend sicher wiederholbar ist, vielmehr das volle Material völlig unkontrollierbar aufgerissen wird. Für ein Sicherheitselement ist dies ein unzureichendes Verhalten.

Bei einer anderen vorbekannten und vergleichbaren Konstruktion sind die Aufreißstreifen von durchlaufenden Schwächungslinien begrenzt (US-A-3487710). Die dabei am inneren Rohrstück vorgesehenen und endseitig umgebogenen Aufreißstreifen sind an der Innenseite des Außenrohres befestigt. Die Herstellung einer solchen Verbindung ist außerordentlich aufwendig, da hiefür einfache Maschinenwerkzeuge, wie sie für die kostengünstige Herstellung eines Serienartikels unbedingt notwendig sind, nicht eingesetzt werden können.

Die erfindungsgemäße Lenkspindel gehört der ersten Kategorie an, und sie geht vom oben aufgezeigten, insbesondere letzterörterten Stand der Technik aus und sie zielt darauf ab, die Lenkspindel in der Weise auszugestalten, daß für ihre Herstellung einfache Maschinenwerkzeuge eingesetzt werden können, wie sie für die Herstellung eines Serienartikels notwendig sind. Die Erfindung löst diese Aufgabe durch jene Maßnahme, die Inhalt und Gegenstand des kennzeichnenden Teiles des Patentanspruches 1 ist. Zweckmäßige Ausgestaltungen der Erfindung sind in den Unteransprüchen festgehalten.

Um die Erfindung zu veranschaulichen, wird ein Ausführungsbeispiel anhand der Zeichnung näher erläutert. Es zeigen:
- Fig. 1: einen Längsschnitt durch die erfindungswesentlichen Teile einer Lenksäule;
- Fig. 2: einen Querschnitt nach der Linie II - II in Fig. 1;
- Fig. 3: eine Ansicht einer Ausführungsvariante eines Aufreißstreifens an einem Rohrstück;
- Fig. 4: einen Querschnitt nach der Linie VI - VI in Fig. 1 und
- Fig. 5: schematisch ein Kraft-Weg-Diagramm.

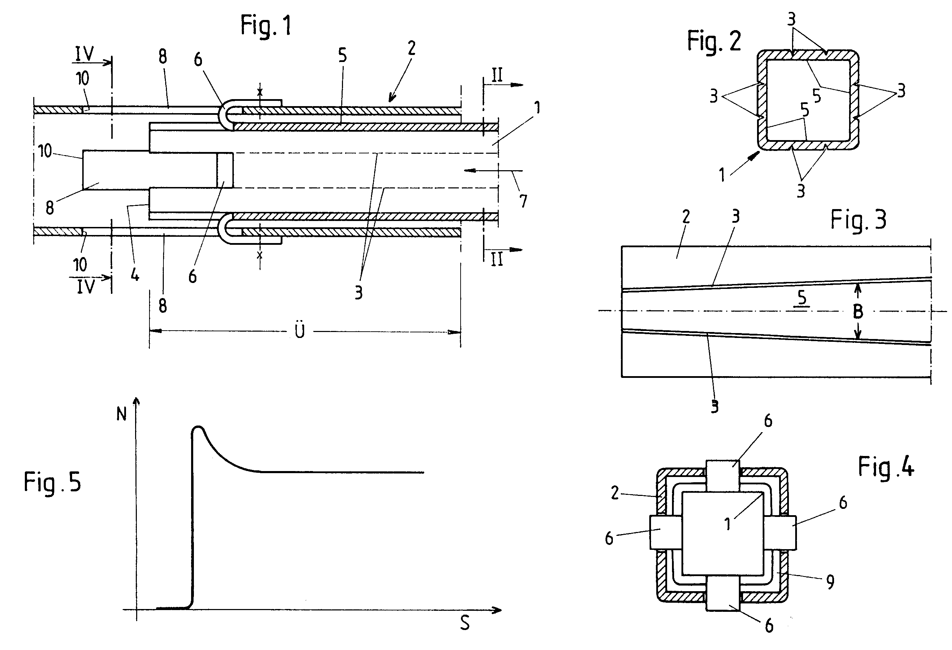

Die Lenksäule nach Fig. 1 besteht unter anderem aus zwei als Rohrstücke ausgebildeten Profilen 1 und 2, an deren hier nicht dargestellten äußeren Enden Formstücke vorgesehen sind, wie sie für Lenksäulen üblich und bekannt sind, die hier, da nicht unmittelbar die Erfindung betreffend, nicht dargestellt sind. Es darf in diesem Zusammenhang hingewiesen werden auf die zahlreichen einschlägigen Veröffentlichungen, die eingangs und oben aufgelistet sind.

Die beiden als Rohrstücke ausgebildeten Profile 1 und 2 liegen koachsial zueinander, wobei das eine Profil 1 in das andere Profil 2 eingeschoben ist. Die Eindringtiefe des einen Profils 1 in das andere Profil 2 wird als Überdeckungsgrad Ü bezeichnet. Das als Rohrstück ausgebildete innere Profil 1 besitzt nun entlang seines Umfanges achsparallel verlaufende Rillen 3, die durch ein geeignetes Herstellungsverfahren gefertigt sind, beispielsweise durch Fräsen, Schneiden, Prägen o. dgl. Diese von der einen Stirnseite 4 des Profils 1 ausgehenden Rillen 3 begrenzen Aufreißstreifen 5, hier im gezeigten Beispiel (Fig. 2) vier Stück, die am stirnseitigen Ende freigeschnitten oder freigestanzt sind, wobei der freigestanzte bzw. freigeschnittene Abschnitt 6 U-förmig nach außen gebogen und am anderen Profil 2 festgelegt ist. Die Rillen 3 sind Schwächungsstellen des Profils.

Beim Ausführungsbeispiel nach Fig. 1 sind die beiden Profile 1 und 2 als Rohrstücke mit rechteckigem Querschnitt ausgebildet. Es liegt im Rahmen der Erfindung, die Rohrstücke auch mit rundem Querschnitt auszugestalten. Im äußeren Profil 2 sind nun mehrere Aussparungen 8 vorgesehen, durch welche die U-förmig umgebogenen Abschnitte 6 der Aufreißstreifen 5 ragen. Die außen liegenden Enden dieser Abschnitte 6 sind mit dem Profil 2 verbunden. Aufgrund dieser Konstruktion kann der Ringspalt 9 zwischen den beiden Profilen 1 und 2 relativ klein gehalten werden. Um im Kollisionsfall das Abrollen der abgerissenen Aufreißstreifen 5 nicht zu behindern, können die der Stirnseite 4 des Profils 1 abgewandten Enden 10 der Aussparungen 8 etwas nach außen gebogen sein, um so jeweils eine trichter- oder keilartige Auf- und Einlauffläche für den im Kollisionsfall abrollenden Abreißstreifen 5 zu bilden. Wirkt auf die Lenksäule nach Fig. 1 eine Kraft achsial ein, wie dies bei einer Kollison der Fall ist, so wird, sobald eine vorbestimmbare Kraft erreicht ist, das Profil 2 im Sinne einer Verkürzung (Pfeil 7) gegen das Profil 1 bzw. umgekehrt geschoben, wobei die Aufreißstreifen 5 dabei freigerissen und aufgerollt werden. Das Ausmaß der dafür erforderlichen Kraft ist in weitem Umfang einstellbar, einmal durch die Form und Tiefe der Rillen 3 und auch durch das ihrer Herstellung dienende Verfahren (Fräsen, Schneiden, Drücken, Prägen u.dgl.), ferner über die Art ihres Verlaufes längs des Profils 1. Diese Rillen 3 können über das Rohrstück parallel zueinander verlaufen und somit Abreißstreifen 5 bilden, die über ihre Länge dieselbe Breite besitzen. Sie können aber auch so angeordnet sein und so verlaufen, daß der Abreißstreifen 5 mit zunehmender Länge eine zunehmende Breite B aufweist, wie dies Fig. 3 veranschaulicht. Sind die Rillen 3 im gezeigten Ausführungsbeispiel nach Fig. 3 geradlinig, so ist es auch möglich, sie in einem gebogenen Verlauf zu führen.

Die Breite oder Weite des Ringspaltes 9 sollte nicht kleiner sein als die Wandstärke des Profils mit den Aufreißstreifen 5, damit im Kollisionsfall die sich abrollenden Abreißstreifen 5 von diesem Ringspalt 9 aufgenommen werden können. Würde der Ringspalt 9 zu eng gewählt, dann würde im Kollisionsfall durch die sich abrollenden Aufreißstreifen das äußere Profil aufgeweitet werden, wodurch nur schwer kontrollierbare Kräfte auftreten, es sei denn, daß in jenem Bereich, in dem sich die beiden Profile gegeneinander verschieben, im äußeren Profil konstruktive Maßnahmen vorgesehen sind, die eine solche Aufweitung kontrolliert zulassen. Dies könnte beispielsweise durch im Außenprofil vorgesehene, längs verlaufende Einschnitte gemacht werden.

Im Ausführungsbeispiel nach Fig. 1 ist der Überdeckungsgrad Ü der beiden Profile 1 und 2 relativ kurz. Es liegt im Rahmen der Erfindung, diesen Überdeckungsgrad Ü größer zu gestalten und dabei in mehreren Querschnittsebenen im Bereich dieser Überdeckung Ü Verbindungen zwischen den Profilen 1 und 2 vorzusehen, wie in Fig. 1 veranschaulicht, wobei in Längsrichtung des einen als Rohrstück ausgebildeten Profils 1 mehrere freigeschnittene oder freigestanzte und umgebogene Abschnitte 6 eines Aufreißstreifens 5 vorgesehen sind. Dabei können aus einem längs verlaufenden Aufreißstreifen 5 mehrere voneinander distanzierte freigeschnittene und umgebogene Abschnitte 6 vorgesehen werden. Es ist auch denkbar, über den gesamten Umfang eines Rohrstückes in gleichen Bogenabständen Rillen 3 vorzusehen, so daß ein Aufreißstreifen 5 unmittelbar neben dem anderen liegt und in achsialem Versatz zueinander umgebogene Abschnitte 6 freigeschnitten oder freigestanzt werden. Im Überdeckungsbereich Ü sind dann in Längsrichtung mehrere Verbindungsstellen vorgesehen, der Art, wie Fig. 1 veranschaulicht.

Der im Kollisionsfall angestrebte Kräfteverlauf ist in Fig. 5 schematisch in einem Kraft-Weg-Diagramm (N - S) dargestellt. Im Augenblick der Kollison wirkt schlagartig auf die Lenkspindel eine relativ große Kraft N ein, die nun entlang der Rillen 3 die Abreißstreifen 5 löst, abreißt und gleichzeitig durch die Verschiebung der Profile 1 und 2 abrollend verformt.

Bei dem gezeigten Ausführungsbeispiel liegen die beiden Profile 1 und 2 zueinander koachsial, mit fluchtenden Achsen. Der erfindungsgemäße Gedanke ist auch bei solchen Lösungen möglich, bei welchen die beiden Profile 1 und 2 nicht koachsial zueinander angeordnet sind, das eine Profil beispielsweise mit einem Teil seines Umfanges am anderen Profil anliegt, wobei dann auf der diesem Bereich abgewandten Seite die Abreißstreifen vorgesehen sind.

Alle gezeigten Ausführungsbeispiele besitzen Aufreißstreifen 5, die durch Rillen 3 in den Profilen begrenzt sind und die unmittelbar einen Teil des jeweiligen Profils darstellen.

## Patentansprüche

1. Lenkspindel für Lenkvorrichtungen bei Kraftfahrzeugen, die aus mindestens zwei als Rohrstücke ausgebildeten Profilen gebildet ist, wobei das eine Rohrstück in das andere Rohrstück eingeschoben ist und sowohl gegen achsialen wie auch gegen radialen Versatz gesichert ist und im Kollisionsfall die Rohrstücke in Axialrichtung gegeneinander verschiebbar sind, wobei am inneren Rohrstück mindestens ein Aufreißstreifen (5) vorbestimmt und vorgesehen ist und ein Ende dieses Aufreißstreifens (5) aus dem Rohrstück freigeschnitten und/oder freigestanzt gegen das äußere Rohrstück umgebogen und mit diesem U-förmig umgebogenen Abschnitt (6) an diesem festgelegt ist und die umgebogenen Abschnitte (6) der Aufreißstreifen (5) an dem, auf die Verschieberichtung der Profile (1, 2) bezogen, vorderen Ende der Aufreißstreifen (5) liegen und gegebenenfalls entlang des Umfanges des Rohrstückes (2) mehrere Aufreißstreifen (5) vorgesehen sind, wobei der Aufreißstreifen (5) durch zwei entlang des Rohrstückes kontinuierlich verlaufende, Schwächungsstellen bildende Rillen (3) gebildet ist, dadurch gekennzeichnet, daß die umgebogenen Abschnitte (6) der Aufreißstreifen (5) durch im außen liegenden Rohrstück (2) vorgesehene Aussparungen (8) ragen und an der Außenseite des außen liegenden Rohrstückes (2) festgelegt sind.

2. Lenkspindel nach Anspruch 1, dadurch gekennzeichnet, daß die Tiefe und/oder Querschnittsform der Rillen (3), die die an einem Rohrstück vorgesehenen Aufreißstreifen (5) begrenzen, über die Länge der Rillen unterschiedlich ist bzw. sind.

3. Lenkspindel nach Anspruch 1 oder 2, dadurch gekennzeichnet, daß die einen Aufreißstreifen (5) begrenzenden Rillen (3) über ihre Länge verschiedene Abstände aufweisen.

4. Lenkspindel nach einem der Ansprüche 1 bis 3, dadurch gekennzeichnet, daß die Länge der einzelnen an einem Rohrstück (1, 2) vorgesehenen Aufreißstreifen (5) unterschiedlich ist.

5. Lenkspindel nach einem der Ansprüche 1 bis 4, dadurch gekennzeichnet, daß beide Profile (1, 2) in an sich bekannter Weise als Rohrstücke ausgebildet sind und Aufreißstreifen (5) sowohl am inneren wie auch am außen liegenden Rohrstück vorgesehen sind und die freigeschnittenen und umgebogenen Abschnitte (6) der Aufreißstreifen (5) jeweils gegen das benachbart liegende Rohrstück gerichtet und an diesem festgelegt sind.

6. Lenkspindel nach einem der Ansprüche 1 bis 5, dadurch gekennzeichnet, daß der Ringspalt (9), der durch die sich überdeckenden Profile (1, 2) begrenzt ist, über seine in Achsrichtung der Profile erstreckende Länge sich keilartig verjüngt.

## Claims

1. A steering spindle for steering devices in motor vehicles, which is formed by at least two sections constructed in the form of tube members, wherein one tube member is inserted into the other tube member and is prevented from being moved being both axially and radially and in the event of a collision the tube members are displaceable towards each other in the axial direction, wherein at least one tear strip (5) is predetermined and provided on the inner tube member and one end of the said tear strip (5) is cut free from the tube member and/or is bent over towards the outer tube member in a punched-out manner and is secured to the said outer tube member by the said portion (6) bent over into a U-shape, and the bent-over portions (6) of the tear strips (5) rest on the front end - with respect to the displacement direction of the sections (1, 2) - of the tear strips (5), and a plurality of tear strips (5) are optionally provided along the periphery of the tube member (2), wherein the tear strip (5) is formed by two corrugations (3) extending continuously along the tube member and forming points of weakness, **characterized in that** the bent portions (6) of the tear strips (5) project through openings (8) provided in the tube member (2) situated on the outside and are secured to the outside of the tube member (2) situated on the outside.

2. A steering spindle according to Claim 1, **characterized in that** the depth and/or the cross-sectional shape of the corrugations (3) bounding the tear strips (5) provided on a tube member is or are different over the length of the corrugations.

3. A steering spindle according to Claim 1 or 2, **characterized in that** the corrugations (3) bounding a tear strip (5) are at different intervals over their length.

4. A steering spindle according to one of Claims 1 to 3, **characterized in that** the length of the individual tear strips (5) provided on a tube member (1, 2) is different.

5. A steering spindle according to one of Claims 1 to 4, **characterized in that** the two sections (1, 2) are constructed in the form of tube members in a manner known *per se*, and tear strips (5) are provided both on the inner tube member and on the tube member situated on the outside, and the free-cut and bent-over portions (6) of the tear strips (5) are each directed towards the adjacent tube member and are secured thereto.

6. A steering spindle according to one of Claims 1 to 5, **characterized in that** the annular gap (9) bounded by the overlapping sections (1, 2) tapers in the shape of a wedge over its length extending in the axial direction of the sections.

## Revendications

1. Arbre de direction pour véhicule automobiles, dans lequel :
- l'arbre de direction est constitué d'au moins deux profilés tubulaires engagés l'un dans l'autre avec maintien axial et radial,
- en cas de collision, les pièces tubulaires peuvent coulisser axialement l'un par rapport à l'autre, la pièce intérieure présentant au moins une bande de déchirure (5) prédéterminée, dont une extrémité, dégagée de la pièce par découpe et/ou par fraisage est recourbée et rabattue sur la pièce externe avec fixation sur celle-ci de cette partie (6) recourbée en forme de U,
- les parties recourbées (6) des bandes de déchirure (5) sont appliqués chacune sur l'extrémité de la bande (5) correspondante, située à l'avant de celle-ci par rapport au sens de coulissement des profilés tubulaires (1, 2) et éventuellement, la périphérie du profilé tubulaire (2) comporte plusieurs bandes de déchirure (5) délimitées chacune par deux rainures (3) constituant des zones d'affaiblissement s'étendant en continu le long de la pièce (2),
caractérisé en ce que
les parties recourbées (6) des bandes de déchirure (5) passent à travers des évidements (8) pratiqués dans la pièce tubulaire externe (2) et sont fixées sur la face externe de cette pièce.

2. Arbre de direction selon la revendication 1, caractérisé en ce que
la profondeur et/ou la forme de la section des rainures (3) délimitant les bandes de déchirure (5) prévues sur une pièce tubulaire varie (ou varient) sur la longueur des rainures.

3. Arbre de direction selon la revendication 1 ou 2,
caractérisé en ce que
les rainures (3) délimitant une bande de déchirure (5) présentent un écartement qui varie sur la longueur des rainures.

4. Arbre de direction selon une des revendications 1 à 3, caractérisé en ce que
les longueurs des diverses bandes de déchirures (5) prévues sur une pièce tubulaire (1, 2) sont différentes.

5. Arbre de direction selon une des revendications 1 à 4, caractérisé en ce que
les deux profilés (1, 2) de manière connue, sont des pièces tubulaires et les bandes de déchirure (5) sont prévues à la fois sur la pièce tubulaire interne et sur la pièce tubulaire externe, les extrémités (6) de ces bandes (5), dégagées par découpe et recourbées, étant rabattues chacune vers la pièce tubulaire voisine et fixées sur celle-ci.

6. Arbre de direction selon une des revendications 1 à 5, caractérisé en ce que
la fente annulaire (9) délimitée par les profilés (1, 2) qui se recouvrent, va en se rétrécissant en forme de coin, sur la longueur axiale des profilés.
